# EUROPEAN PATENT SPECIFICATION

(11) **EP 2 390 546 B1**
(45) Date of publication and mention of the grant of the patent: **09.01.2013**
(21) Application number: 11166585.7
(22) Date of filing: 18.05.2011
(51) Int. Cl.: F16L 25/00, F16L 47/06

(54) **Cut profile of the end of a double-walled corrugated pipe and method of and device for forming said profile**
Schnittumformung am Ende eines Wellrohrs mit Doppelwand und Verfahren und Vorrichtung zu seiner Umformung
Mise en forme de coupe à l'extrémité d'un tuyau ondulé avec double paroi et procédé relatif et dispositif de mise en forme

(30) Priority: 28.05.2010 IT RA20100017
(43) Date of publication of application: 30.11.2011
(73) Proprietor: IPM S.R.L., 48022 Lugo (Ravenna) (IT)
(72) Inventor: Argnani, Claudio, 48022, Lugo (Ravenna) (IT)
(74) Representative: Petruzziello, Aldo

(56) References cited:
- WO-A1-87/07935
- DE-U1- 9 114 651
- US-A- 3 985 051
- US-A- 5 893 961
- US-A1- 2004 108 722

## Description

The object of the present invention is a particular cut shaping of the end of a corrugated pipe with double wall in plastic material of the polyolefin type for welding by means of injection of a coaxial sleeve in order to form a joint of the same pipe.

The invention likewise relates to a method and a device for performing such a cut shaping.

In the current state of the art there is increasing use of corrugated pipes with double wall in a plastic material of the polyolefin type (above all polyethylene and polypropylene) due to their features of resistance both to the internal pressure and to the external stresses, and due to the considerable lightness, with a good saving in material compared to traditional pipes with solid wall.

Problems arise however in the forming of the "bell", the latter being the term whereby the external sleeve shaped end of the pipe is known in the industry, including the relative standards, which couples with the normal end, at times bevelled, of the next pipe, forming a joint which takes the name therefrom of "bell joint". The seal therein is formed normally with the addition of a gasket ring in rubber.

These problems, which occur in the phases of hot plastic deformation, mainly arise from the alteration of the shape of the ribbings and from the presence of a plastic memory in the polyolefins, which tends to make the material return in time towards the original position.

They were effectively overcome by making the external sleeve of the joint by means of injection during the process of forming, in such a way that it can adhere and weld with the edge of the pipe itself. In this way the shape of the bell remains stable and the ribbings of the pipe do not deform. Such a solution is described in the Italian patent application RA2008A000030 in the name of the same Applicant, disclosing all features of the preamble of claim 1.

A new problem however arises, linked to the welding by injection of the external sleeve with the ends of the pipe, which has to be resistant and watertight. For this, the adhesion between the two welded materials has to take place on a sufficiently large surface, regular and without breaks. There is in fact the risk that, during the injection of the sleeve, a part of air is trapped between the varyingly cut ribbing and the injected material, weakening the joint and/or deforming the ribbings of the corrugation.

To avoid the above disadvantage and have a sufficient contact surface, one or more radial corrugations of the pipe are removed with a mill, usually subsequent to the cutting of the pipe: this operation is however normally complex and burdensome, above all for pipes with a large diameter.

US 5 893 961 describes a method of welding by fusing of a sleeve or bell at the end of a corrugated pipe. According to the embodiment of Figures 15 and 16 the end of the pipe is prepared by performing a cut perpendicular to the axis of the pipe so as to obtain a short cylindrical ring on the internal wall and a ring with conical profile which extends as far as the top of a corrugation on the external wall. During the fusion for the application of the sleeve the two rings are deformed and made coplanar, positioning perpendicularly to the axis of the pipe, with a part of the cylindrical ring which projects slightly inside the internal wall of the pipe.

The object of the invention is that of avoiding the previous problems, linked therefore to the difficulties of welding between injected sleeve and end of the pipe, proposing and devising a final shaping of the latter, originated by the cut, particularly favourable to the formation of the aforesaid weld.

Another object of the invention is that of providing such a shaping which is simple and economical to make, which does not require subsequent machinings on the corrugated pipe after cutting and which eliminates the risk of trapping of air between the ribbing and the injected material during the injection of the sleeve,
These objects are achieved by the present invention which proposes a cut shaping of the end of a corrugated pipe which has the features of the annexed independent claim 1.

Advantageous embodiments of the invention are disclosed by the dependent claims.

This shaping consists, as first component, of a cylindrical ring of the internal wall of the corrugated pipe with double wall, obtained with cut perpendicular to the axis of the pipe in an intermediate zone in an axial direction to the development of the corrugation or ribbing formed by the external wall. As second component it consists instead of a ring, axially backward in relation to the first, made up of a section of corrugation, with trend approximately or prevalently radial, extending from the centre, where it is joined to the internal wall, towards the periphery, immediately adjacent to the previous ring, obtained in turn conveniently with a cut integral and simultaneous to the first, which at the same time also removes the entire outermost development of the corrugation.

The two previous members, the ring of internal wall and the adjacent portion of corrugation define, in co-operation one with the other, a sufficiently extensive surface of adhesion of the weld, easy to fill, and ensure at the same time a good containment of the material, without generating the presence of inclusions of air. A further increase in the surface of adhesion is obtained then by incorporating in the weld also the thicknesses of the two members of the pipe.

The joining member made in this way is resistant because the two walls form, together with the injected material, a solid, compact and homogeneous volume.

The fact that the shaping, as above, can easily be performed using a pack of cutting disks, of adequate axial thickness, integral with a coaxial mill, of appropriate thickness and diameter, is also a reason for simplification. Moreover the fact that the cut can be performed on the production line during extrusion of the pipe and that with a single cut it is possible to perform the shaping, as above, and simultaneously the profiling required at the end of the plain pipe to be inserted in the bell, which has to be cut at the minimum external diameter of the corrugated pipe, corresponding to the sections wherein the two walls are welded one to the other.

These and further features and advantages of the present invention will be made clearer by the following detailed description of one of its embodiments, illustrated by way of a non-limiting example in the accompanying drawings, in which:

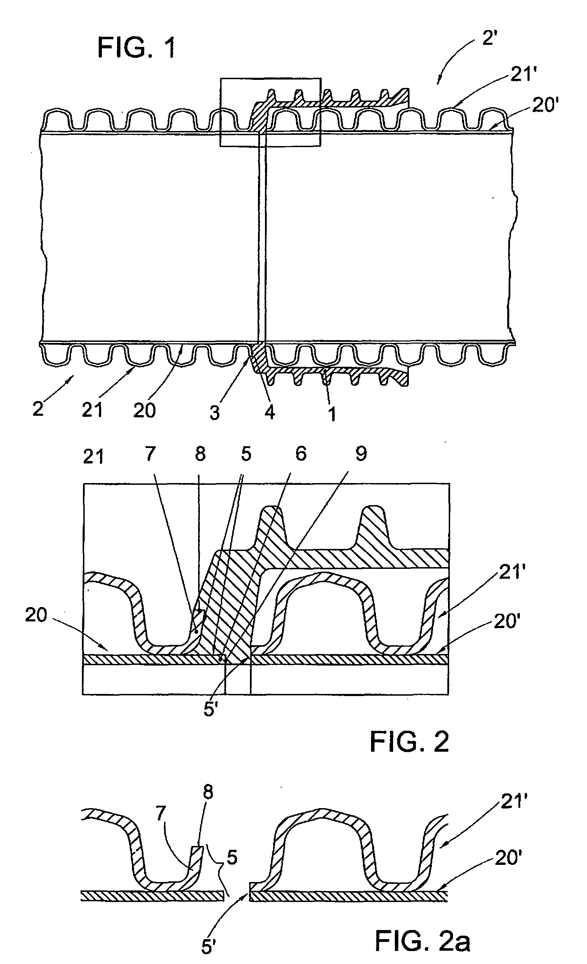

Fig. 1 represents an overall axial section of the joint of a corrugated pipe with double wall, in plastic material of the polyolefin type, in particular with the shaping of the end of the pipe performed according to the principles of the present invention.
Fig. 2 represents an enlargement of the detail in the square of Fig. 1, depicting the zone of welding between the shaped end of the pipe and the injected external sleeve.
Fig. 2a is a view like Fig. 2 showing the cut shaping of the pipe before the application of the sleeve.
Fig. 3 shows an axial section of the pipe, in relation to the cutting diagram for performing simultaneously the shaping for the injection welding of the sleeve and the free end of the pipe itself.

Referring to these drawings, 3 denotes a joint between the ends of two corrugated pipes with double wall denoted generically with reference numerals 2, 2' and each comprising a plain internal wall 20, 20' and an undulated external wall 21, 21', having a succession of corrugations 22, 22', respectively. The joint 3 is obtained by inserting the end of one of the two pipes, in the example given the pipe 2', in a sleeve 1 welded by injection to the end of the other corrugated pipe 2, forming the female part of the joint (3).

The zone of welding by injection of the sleeve 1, denoted by reference numeral 4, is characterised by the presence of a particular shaping 5 of the end of the pipe 2, composed of a cylindrical ring 6, formed on the internal wall 20 of the pipe and of an approximately radial ring 7, formed on the external ring 21, the two rings 6, 7 cooperating one with the other so as to form an adequate container of the weld, whose surface development, in relation to the adherence, continues on the two thicknesses, in other words on the cut ends 8 and 9 of the two rings.

The efficacy of the weld and the compactness of the relative volume of joining are evident from Figs, 1 and 2, where the rings 6 and 7 are incorporated in a single member. This is made possible by the particular cut shaping of the corrugated pipe 2, wherein the end 8 of the external radial ring 7 is axially backward in relation to the end 9 of the internal cylindrical ring 6, thus forming an optimal configuration for holding the material during the injection of the sleeve 1, avoiding the formation of sacs of air between the ribbing whereon the radial ring 7 is formed and the injected material, which would weaken the joint 3.

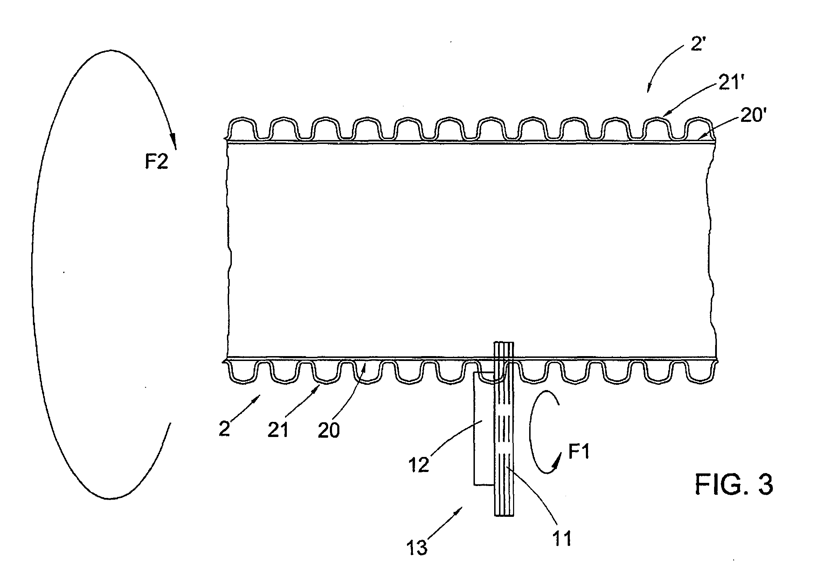

Fig. 3 shows schematically the possibility of performing in a simple manner the shaping 5 of the pipe 2 and simultaneously the cutting of the end 5' of the pipe 2'. The preferred cutting device 13 is made up of a pack of cutting disks 11 and an adjacent and coaxial mill 12, having a rotating cutting motion indicated by the arrow F1 and simultaneously a planetary motion F2 around the corrugated pipe exiting from the extruder. The device 13 is obviously provided with a reciprocal linear motion so as to move forward together with the pipe which is extruded continuously during performance of the cut and, once the cut has been made, return into position to perform a new cut.

With the cutting device 13 the cut 9 is therefore obtained of the plain internal wall 20 of the pipe 2 perpendicular to the axis of the pipe and the cut 8 of the rising section with more radial trend of the corrugated external wall 21 parallel to the axis of the pipe in an axially backward position in relation to the cut 9 with simultaneous removal of the material of the corrugation or ribbing at which the cutting takes place. At the same time the pack of disks 11 of the cutting device 13 performs the shaping 5' of the end of the pipe 2', forming a cut perpendicular to the axis of the pipe at its minimum external diameter, in the area wherein the corrugated external wall 21' is attached to the plain internal wall 20'.

By appropriately positioning the cutting assembly, varying the thickness of the pack of disks and of the mill and the respective diameters, it is possible to perform the shaping 5, as above, also varying, according to working needs, the extension of the rings 6 and 7 of the shaping itself. For example the mill 12, rather than a cylindrical profile, could have a conical profile tapering away from the pack of disks 11, so as to obtain a cut 8 which is slanting rather than parallel to the axis of the pipe, although this embodiment is less advantageous than the one illustrated.

The form of the corrugation of the pipe with double wall can also be, to a certain extent, different from that illustrated, both in the proportions and in the development, more particularly the slant of the ring 7 can be with right angle in relation to the internal wall 20.

The length or development of the two rings 6 and 7 can also be variable, in relation to the best formation of the weld of the injected sleeve, up to the maximum allowed by the type of ribbing.

Naturally the invention is not limited to the particular embodiment previously described and illustrated, but instead numerous detail changes can be made thereto, within reach of the person skilled in the art, without thereby departing from the scope of the same invention as defined by the annexed claims.

## Claims

1. A double wall corrugated pipe (2) in a plastic material of the polyolefin type, comprising a cylindrical internal wall (20) and a corrugated external wall (21), said pipe having an end with an external bell or sleeve (1), injected in situ, also in a plastic material of the polyolefin type, and positioned axially in relation to the pipe (2), apt to form a joint (3) of the corrugated pipe (2) to another corrugated pipe (2'); said end with external sleeve (1) having a shaping (5) composed of a first internal ring (6) obtained with a cut (9) in a section of the cylindrical internal wall (20), intermediate in relation to the axial development of a single corrugation (22) of the external wall (21) of the corrugated pipe (2) and a second ring (7), obtained with a cut (8) performed on said corrugation (22) of the external wall (21),
**characterised in that** said cut (8) of the second ring (7) is formed on the rising section with a more radial trend of said corrugation (22) in an axially backward position in relation to the cut (9) of said first ring (6).

2. **Corrugated pipe (2)** according to claim 1, wherein said cut (9) of the first ring (6) is perpendicular to the axis of the pipe (2).

3. **Corrugated pipe (2)** according to claim 1 or 2, wherein said cut (8) of the second ring (7) is slanting in relation to the axis of the pipe (2).

4. **Corrugated pipe (2)** according to claim 1 or 2, wherein said cut (8) of the second ring (7) is parallel to the axis of the pipe (2).

5. **Corrugated pipe (2)** according to any one of the previous claims, wherein the second ring (7) has a development perpendicular to the axis of the pipe (2).

6. **Corrugated pipe (2)** according to any one of the previous claims, wherein said external sleeve (1) involves and covers the thicknesses or cuts (9, 8) of the external edges of the two rings (6, 7).

7. Method for forming an external bell or sleeve (1) at an end of a double wall corrugated pipe (2) in a plastic material of the polyolefin type, comprising a cylindrical internal wall (20) and a corrugated external wall (21), said sleeve (1) being apt to form a joint (3) of the corrugated pipe (2) to another corrugated pipe (2'); said method comprising the following steps:
performance of a cut (9) in a section of cylindrical internal wall (20), intermediate in relation to the axial development of a single corrugation (22) of the external wall (21) of the corrugated pipe (2), to obtain a first internal ring (6);
performance of a cut (8) on said corrugation (22) of the external wall (21), to obtain a second ring (7);
wherein said cut (8) of the second ring (7) is formed on the rising section with a more radial trend of said corrugation (22) in an axially backward position in relation to the cut (9) of said first ring (6);
in situ injection of said external sleeve (1) also in a plastic material of the polyolefine type positioned axially in relation to the pipe (2) and covering said cuts (9, 8).

8. Method according to claim 7, wherein said cut (9) on the internal cylindrical wall (20) is performed perpendicularly to the axis of the pipe, while said cut (8) on the corrugation (22) is performed slantingly or parallel to the axis of the pipe.

9. Method according to claim 7 or 8, wherein said cuts (9) and (8) are formed simultaneously.

10. Method according to any one of claims 7 to 9, wherein during the performing of said cuts (9) and (8) the shaping (5') of the end of the other pipe (2') to be joined to the pipe (2) is performed simultaneously, forming a cut perpendicular to the axis of the pipe at its minimum external diameter, in the area wherein the corrugated external wall (21') is attached to the plain internal wall (20').

11. Device of shaping of the end of a corrugated pipe (2) with double wall (20, 21) in a plastic material of the polyolefin type, for forming an external bell or sleeve (1), injected in situ, also in a plastic material of the polyolefin type, and positioned axially in relation to the pipe (2), in order to form a joint (3) of the corrugated pipe (2) to another corrugated pipe (2'); according to anyone of claims 8 to 10, said device comprising:
a pack of cutting disks (11) and an adjacent and coaxial mill (12), having a rotating cutting motion and simultaneously a planetary motion around the corrugated pipe for the simultaneous performance of a cut (9) in a section of the cylindrical internal wall (20), intermediate in relation to the axial development of a single corrugation (22) of the external wall (21) of the corrugated pipe (2), and a cut (8) on the rising section with more radial trend of said corrugation (22) in an axially backward position in relation to the cut (9).

12. Device of shaping of the end of a corrugated pipe (2) according to claim 11, wherein said pack of disks (11) has an external cylindrical profile and said mill (12) has an external cylindrical or conical profile tapering away from the pack of disks (11).

## Patentansprüche

1. Doppelwand-Wellrohr (2) aus einem Kunststoffmaterial vom Polyolefintyp, umfassend eine zylinderförmige Innenwand (20) und eine gewellte Außenwand (21), wobei das Rohr ein Ende mit einer Glocke oder Muffe (1) aufweist, die auch aus einem Kunststoffmaterial vom Polyolefintyp *in situ* gespritzt wurde und in Bezug auf das Rohr (2) in der Achsenrichtung positioniert ist und dazu geeignet ist, eine Verbindung (3) des Wellrohrs (2) mit einem anderen Wellrohr (2') zu bilden; wobei das Ende mit der äußeren Muffe (1) eine Umformung (5) aufweist, die aus einem ersten inneren Ring (6), erhalten durch einen Schnitt (9) in einem Abschnitt der zylinderförmigen Innenwand (20), welcher sich in Bezug auf die Entwicklung in der Achsenrichtung einer einzelnen Wellung (22) der Außenwand (21) des Wellrohrs (2) in einem Zwischenbereich befindet, und einem zweiten Ring (7), erhalten durch einen Schnitt (8), welcher an der Wellung (22) der Außenwand (21) vorgenommen wird, besteht,
**dadurch gekennzeichnet, dass** der Schnitt (8) des zweiten Rings (7) an einem ansteigenden Abschnitt mit einem radialeren Verlauf der Wellung (22) an einer in Bezug auf den Schnitt (9) des ersten Rings (6) in der Achsenrichtung hinten liegenden Position gebildet wird.

2. Wellrohr (2) nach Anspruch 1, wobei der Schnitt (9) des ersten Rings (6) senkrecht zu der Achse des Rohrs (2) verläuft.

3. Wellrohr (2) nach Anspruch 1 oder 2, wobei der Schnitt (8) des zweiten Rings (7) in Bezug auf die Achse des Rohrs (2) geneigt ist.

4. Wellrohr (2) nach Anspruch 1 oder 2, wobei der Schnitt (8) des zweiten Rohrs (7) parallel zu der Achse des Rohrs (2) verläuft.

5. Wellrohr (2) nach einem der vorhergehenden Ansprüche, wobei der zweite Ring (7) eine senkrecht zu der Achse des Rohrs (2) verlaufende Entwicklung aufweist.

6. Wellrohr (2) nach einem der vorhergehenden Ansprüche, wobei die äußere Muffe (1) die Dicken oder Schnitte (9, 8) der Außenkanten der beiden Ringe (6, 7) umfasst und abdeckt.

7. Verfahren zur Bildung einer äußeren Glocke oder Muffe (1) an einem Ende eines Doppelwand-Wellrohrs (2) aus einem Kunststoffmaterial vom Polyolefintyp, umfassend eine zylinderförmige Innenwand (20) und eine gewellte Außenwand (21), wobei die Muffe (1) dazu geeignet ist, eine Verbindung (3) des Wellrohrs (2) mit einem anderen Wellrohr (2') zu bilden; wobei das Verfahren die folgenden Schritte umfasst:
Vornehmen eines Schnitts (9) in einem Abschnitt der zylinderförmigen Innenwand (20), welcher sich in Bezug auf die Entwicklung in der Achsenrichtung einer einzelnen Wellung (22) der Außenwand (21) des Wellrohrs (2) in einem Zwischenbereich befindet, um einen ersten inneren Ring (6) zu erhalten;
Vornehmen eines Schnitts (8) an der Wellung (22) des Außenrohrs (21), um einen zweiten Ring (7) zu erhalten;
wobei der Schnitt (8) des zweiten Rings (7) an dem ansteigenden Abschnitt mit einem radialeren Verlauf der Wellung (22) an einer in Bezug auf den Schnitt (9) des ersten Rings (6) in der Achsenrichtung hinten liegenden Position gebildet wird;
Spritzen der äußeren Muffe (1) auch aus einem Kunststoffmaterial vom Polyolefintyp, die in Bezug auf das Rohr (2) in der Achsenrichtung positioniert ist und die Schnitte (9, 8) abdeckt, *in situ.*

8. Verfahren nach Anspruch 7, wobei der Schnitt (9) an der inneren zylinderförmigen Wand (20) senkrecht zu der Achse des Rohrs vorgenommen wird, während der Schnitt (8) an der Wellung (22) schräg oder parallel zu der Achse des Rohrs vorgenommen wird.

9. Verfahren nach Anspruch 7 oder 8, wobei die Schnitte (9) und (8) gleichzeitig gebildet werden.

10. Verfahren nach einem der Ansprüche 7 bis 9, wobei die Umformung (5') des Endes des anderen Rohrs (2'), das mit dem Rohr (2) verbunden werden soll, während der Vornahme der Schnitte (9) und (8) gleichzeitig vorgenommen wird, wobei in dem Bereich, in dem die gewellte Außenwand (21') an der flachen Innenwand (20') angebracht wird, an dem minimalem Außendurchmesser des Rohrs ein Schnitt senkrecht zu seiner Achse gebildet wird.

11. Vorrichtung zur Umformung des Endes eines Wellrohrs (2) mit einer Doppelwand (20, 21) aus einem Kunststoffmaterial vom Polyolefintyp, um eine äußere Glocke oder Muffe (1) zu bilden, die auch aus einem Kunststoffmaterial vom Polyolefintyp *in situ* gespritzt wird und in Bezug auf das Rohr (2) in der Achsenrichtung positioniert ist, um eine Verbindung (3) des Wellrohrs (2) mit einem anderen Wellrohr (2') zu bilden, nach einem der Ansprüche 8 bis 10, wobei die Vorrichtung Folgendes umfasst: einen Satz von Schneidescheiben (11) und eine benachbarte und koaxiale Fräse (12), die für die gleichzeitige Vornahme eines Schnitts (9) in einem Abschnitt der zylinderförmigen Innenwand (20), welcher sich in Bezug auf die Entwicklung in der Achsenrichtung einer einzelnen Wellung (22) der Außenwand (21) des Wellrohrs (2) in einem Zwischenbereich befindet, und eines Schnitts (8) an dem ansteigenden Abschnitt mit einem radialeren Verlauf der Wellung (22) an einer in Bezug auf den Schnitt (9) in der Achsenrichtung hinten liegenden Position eine drehende Bewegung und gleichzeitig eine planetarische Bewegung um das Wellrohr aufweisen.

12. Vorrichtung zur Umformung des Endes eines Wellrohrs (2) nach Anspruch 11, wobei der Satz von Scheiben (11) ein äußeres zylinderförmiges Profil aufweist, und die Fräse (12) ein äußeres zylinderförmiges oder konisches Profil aufweist, das sich von der Gruppe von Scheiben (11) weg verjüngt.

## Revendications

1. Tuyau ondulé avec double paroi (2) en matériau plastique de type polyoléfine, comprenant une paroi intérieure cylindrique (20) et une paroi extérieure ondulée (21), le tuyau présentant une extrémité comprenant une tulipe ou un manchon extérieur (1), injecté in situ, également en matériau plastique de type polyoléfine, et positionné axialement par rapport au tuyau (2), capable de former une jointure (3) du tuyau ondulé (2) vers un autre tuyau ondulé (2') ; l'extrémité avec le manchon extérieur (1) présentant une mise en forme (5) composée d'une première bague intérieure (6) obtenue avec une découpe (9) dans une section de la paroi intérieure cylindrique (20), intermédiaire par rapport au développement axial d'une seule ondulation (22) de la paroi extérieure (21) du tuyau ondulé (2) et une seconde bague (7), obtenue avec une découpe (8) effectuée sur l'ondulation (22) de la paroi extérieure (21),
**caractérisé en ce que** la découpe (8) de la seconde bague (7) est formée sur la section montante avec une tendance plus radiale de l'ondulation (22) dans une position axialement arrière par rapport à la découpe (9) de la première bague (6).

2. Tuyau ondulé (2) selon la revendication 1, dans lequel la découpe (9) de la première bague (6) est perpendiculaire à l'axe du tuyau (2).

3. Tuyau ondulé (2) selon la revendication 1 ou 2, dans lequel la découpe (8) de la seconde bague (7) est oblique par rapport à l'axe du tuyau (2).

4. Tuyau ondulé (2) selon la revendication 1 ou 2, dans lequel la découpe (8) de la seconde bague (7) est parallèle à l'axe du tuyau (2).

5. Tuyau ondulé (2) selon l'une quelconque des revendications précédentes, dans lequel la seconde bague (7) présente un développement perpendiculaire à l'axe du tuyau (2).

6. Tuyau ondulé (2) selon l'une quelconque des revendications précédentes, dans lequel le manchon extérieur (1) englobe et couvre les épaisseurs ou les découpes (8, 9) des bords extérieurs des deux bagues (6, 7).

7. Procédé destiné à former une tulipe ou un manchon extérieur (1) sur une extrémité d'un tuyau ondulé avec double paroi (2) en matériau plastique de type polyoléfine comprenant une paroi intérieure cylindrique (20) et une paroi extérieure ondulée (21), le manchon (1) étant capable de former une jointure (3) du tuyau ondulé (2) vers un autre tuyau ondulé (2') ; le procédé comprenant les étapes suivantes :
ffectuer une découpe (9) dans une section de paroi intérieure cylindrique (20) intermédiaire par rapport au développement axial d'une seule ondulation (22) de la paroi extérieure (21) du tuyau ondulé (2), pour obtenir une première bague intérieure (6) ;
effectuer une découpe (8) sur l'ondulation (22) de la paroi extérieure (21), pour obtenir une seconde bague (7) ;
**caractérisé en ce que** la découpe (8) de la seconde bague (7) est formée sur la section montante avec une tendance plus radiale de l'ondulation (22) dans une position axialement arrière par rapport à la découpe (9) de la première bague (6) ;
injection in situ du manchon extérieur (1), également en matériau plastique de type polyoléfine, positionné axialement par rapport au tuyau (2) et couvrant les découpes (9, 8).

8. Procédé selon la revendication 7, dans lequel la découpe (9) sur la section de paroi intérieure cylindrique (20) est effectuée perpendiculairement à l'axe du tuyau, tandis que la découpe (8) sur l'ondulation (22) est effectuée en inclinaison ou parallèlement à l'axe du tuyau.

9. Procédé selon la revendication 7 ou 8, dans lequel les découpes (9) et (8) sont formées simultanément.

10. Procédé selon l'une quelconque des revendications 7 à 9, dans lequel, pendant la réalisation des découpes (9) et (8), la mise en forme (5') de l'extrémité de l'autre tuyau (2') à joindre au tuyau (2) est effectuée simultanément, en formant une découpe perpendiculaire à l'axe du tuyau à son diamètre extérieur minimal, dans la zone où la paroi extérieure ondulée (21') est fixée à la paroi intérieure plate (20').

11. Dispositif de mise en forme de l'extrémité d'un tuyau ondulé (2) avec double paroi (20, 21) en matériau plastique de type polyoléfine, pour former une tulipe ou un manchon extérieur (1), injecté in situ, également en matériau plastique de type polyoléfine, et positionné axialement par rapport au tuyau (2) pour former une jointure (3) du tuyau ondulé (2) vers un autre tuyau ondulé (2') ; selon l'une quelconque des revendications 8 à 10, le dispositif comprenant : un paquet de disques de découpe (11) et une fraiseuse adjacente et coaxiale (12) ayant un mouvement de découpe rotatif et simultanément un mouvement planétaire autour du tuyau ondulé pour effectuer simultanément une découpe (9) dans une section de la paroi intérieure cylindrique (20), intermédiaire par rapport au développement axial d'une seule ondulation (22) de la paroi extérieure (21) du tuyau ondulé (2), et une découpe (8) sur la section montante avec une tendance plus radiale de l'ondulation (22) dans une position axialement arrière par rapport à la découpe (9).

12. Dispositif de mise en forme de l'extrémité d'un tuyau ondulé (2) selon la revendication 11, dans lequel le paquet de disques (11) présente un profilé cylindrique extérieur et la fraiseuse (12) présente un profilé cylindrique ou conique extérieur fuselé en partant du paquet de disques (11).
